# EUROPEAN PATENT APPLICATION

(11) **EP 4 492 503 A1**
(43) Date of publication of application: **15.01.2025**
(21) Application number: 23861920.9
(22) Date of filing: 26.05.2023
(51) Int. Cl.: H01M 4/62, H01M 4/505, H01M 4/525

(54) **COMPOSITE POSITIVE ELECTRODE ACTIVE MATERIAL, PREPARATION METHOD THEREFOR, AND ELECTRIC DEVICE COMPRISING COMPOSITE POSITIVE ELECTRODE ACTIVE MATERIAL**

(30) Priority: 05.09.2022 CN 202211075942
(71) Applicant: Contemporary Amperex Technology (Hong Kong) Limited, Central, Central And Western District (HK)
(72) Inventor: LIU, Shaojun, Ningde, Fujian 352100 (CN); ZHAN, Wenwei, Ningde, Fujian 352100 (CN); ZHANG, Xinxin, Ningde, Fujian 352100 (CN); OUYANG, Chuying, Ningde, Fujian 352100 (CN); LI, Qingzheng, Ningde, Fujian 352100 (CN)
(74) Representative: Laufhütte, Dieter
(86) International application number: PCT/CN2023/096627
(87) International publication number: WO 2024/051216

(57) **Abstract**

The present application provides a composite positive electrode active material, a method for preparing the same, and an electric device including the same. The method includes: S100, providing positive electrode active material particles; S200, providing a solid aluminum salt to the positive electrode active material particles to make the solid aluminum salt cover a surface of the positive electrode active material particles; and S300, providing a solid base to the positive electrode active material particles covered by the solid aluminum salt to make the solid aluminum salt and the solid base undergo an in situ solid-phase chemical reaction and generate a cladding layer covering the surface of the positive electrode active material particles, to obtain the composite positive electrode active material, wherein the cladding layer comprises alumina nanoparticles. The method of the present application is a simple production process, has low cost and energy consumption, and a high yield of the prepared alumina; the alumina can uniformly cover the surface of the positive electrode active material particles, effectively protect the positive electrode active material, and ensure the electrochemical performance of the positive electrode active material.

## Description

### CROSS REFERENCE TO RELATED APPLICATION

This application claims priority to Chinese Patent Application No. 202211075942.7 entitled "Composite Positive Electrode Active Material, Method for Preparing the Same, and Electric Device Comprising the Same" and filed on September 5, 2022, which is incorporated herein by reference in its entirety.

### TECHNICAL FIELD

The present application belongs to the technical field of batteries, in particular to a composite positive electrode active material, a method for preparing the same, and an electric device comprising the same.

### BACKGROUND

Secondary batteries have characteristics such as high capacity and long life, and thus are widely used in electronic devices, such as a mobile phone, a notebook computer, an electric vehicle, an electric car, an electric airplane, an electric boat, an electric toy car, an electric toy boat, an electric toy airplane, and power tools, and the like.

As battery's applications become more widespread, the requirements for the performance of the secondary battery become progressively more stringent. In order to improve the performance of secondary batteries, materials within the secondary batteries, such as positive electrode active materials, are typically optimized and improved. However, when the improved positive electrode active material is applied to the secondary battery, the secondary battery is still unable to improve both the cycling performance and the charge/discharge performance during use.

### SUMMARY

The present application is made in view of the foregoing subject matter, and is directed to providing a composite positive electrode active material, a method for preparing the same, and an electric device comprising the same.

A first aspect of the present application provides a method for preparing a composite positive electrode active material, comprising: S100, providing positive electrode active material particles; S200, providing a solid aluminum salt to the positive electrode active material particles to make the solid aluminum salt cover a surface of the positive electrode active material particles; and S300, providing a solid base to the positive electrode active material particles covered by the solid aluminum salt to make the solid aluminum salt and the solid base undergo an in situ solid-phase chemical reaction and generate a cladding layer covering the surface of the positive electrode active material particles, to obtain the composite positive electrode active material, wherein the cladding layer comprises alumina nanoparticles.

As a result, by pre-coating the surface of the positive electrode active material particles with a solid aluminum salt in the present application, the solid base and the solid aluminum salt can undergo a solid phase chemical reaction on the surface of the positive electrode active material particles and generate alumina that uniformly covers the surface of the positive electrode active material particles, so that it can play a good protective role for the positive electrode active material as a whole, and ensure the structural stability of the positive electrode active material. When the prepared positive electrode active material is applied to the secondary battery, the cycling performance and thermal stability of the secondary battery can be improved. Moreover, the method of the present application is a simple production process, has low cost and energy consumption, and a high yield of the prepared alumina.

In some embodiments, in S200, a mass percentage of the solid aluminum salt is denoted as m wt%, based on the total mass of the solid aluminum salt and the positive electrode active material particles, and 0.05≤m≤10.

As a result, when the mass percentage m wt% of the solid aluminum salt of the present application is in the above range, the alumina particles generated by the solid aluminum salt and the solid base can be sufficiently coated on the surface of the positive electrode active material particles, reducing the risk of the positive electrode active material and the electrolytic solution coming into contact with each other and having a side reaction, so as to ensure the electrochemical performance of the secondary battery; and the thickness of the cladding layer will not be excessively thick, so as to ensure that the lithium ion can smoothly migrate from the electrolytic solution to the positive electrode active material through the cladding layer, or from the positive electrode active material to the electrolytic solution, thereby further ensuring the electrochemical performance of the secondary battery.

In some embodiments, in S300, a ratio of a molar percentage of the solid aluminum salt to a molar percentage of the solid base is denoted as n, 0.02 ≤ n ≤ 1, based on the total molar amount of the solid aluminum salt and the solid base; optionally, 0.2 ≤ n ≤ 1.

As a result, when n of the present application is in the above range, the molar amount of the solid base is relatively high, the solid-phase chemical reaction is faster, heat will be released in the system in time, and the system will become wetter, thus accelerating the generation of alumina and improving the reaction rate. In addition, the reaction at the above ratio can regulate the morphology of the cladding layer, the particle size of the alumina particles is more uniform, and the covering effect on the positive electrode active material is better. Moreover, the content of the solid base is not excessively high, and the solid base is not prone to residue after reacting with the solid aluminum salt, which can reduce the problem of deterioration of the electrochemical performance due to the side reaction of the residual solid base with the electrolytic solution and ensure the electrochemical performance of the secondary battery containing the composite positive electrode active material.

In some embodiments, the general formula of the positive electrode active material particles is LiₓNiₐCo_{b}Mn_{c}O₂, in which 0 < x ≤ 2.1, 0< a ≤ 1, 0 ≤ b ≤ 1, 0 ≤ c ≤ 1, and 0.1 ≤ a + b + c ≤ 1; and/or the solid aluminum salt comprises one or more of aluminum sulfate, aluminum nitrate, and aluminum chloride; and/or the solid base comprises sodium hydroxide and/or potassium hydroxide. The inter-lattice force of the aforesaid solid aluminum salt is relatively weak, and the chemical bonding force of the atoms (or ions or molecules) is weak, so that at a lower temperature, an external substance such as a solid base can enter into the interior of the lattice and react, which is conducive to the occurrence of a chemical reaction between a solid base and a solid aluminum salt, and to the improvement of the reaction rate and the reaction yield. The above positive electrode active material has higher structural stability and higher capacity. The above-described base is more alkaline, which facilitates rapid reaction with the solid aluminum salt to generate alumina.

In some embodiments, in S300, the solid aluminum salt and the solid base undergo an in-situ solid-phase chemical reaction by heat treatment, and the heat treatment comprises condition (1) and/or condition (2): (1) the temperature T°C of the heat treatment satisfies: T ≤ 100; optionally, 20 ≤ T ≤ 50; and (2) the time S min of the heat treatment satisfies: 30 ≤ S ≤ 60; optionally, 30 ≤ S ≤ 40. Appropriately increasing the temperature and time of the reaction system is conducive to accelerating the reaction rate of the solid aluminum salt and the solid base, and when the heat treatment temperature T°C is in the above range, it basically does not cause the decomposition of the positive electrode active material, which can ensure the structural stability of the positive electrode active material.

In some embodiments, in S200, the solid aluminum salt is provided to the positive electrode active material particles under ball milling, and the rotation speed of the ball milling is from 200r/min to 800r/min; and/or the ball-milling time is from 0.5h to 6h; and/or in S300, the solid base is provided to the positive electrode active material covered by the solid aluminum salt under ball milling, and the rotation speed of the ball milling is from 200r/min to 800r/min; and/or the ball-milling time is from 0.5h to 6h. The ball milling facilitates increasing the contact interface between the solid base and the solid aluminum salt, thereby accelerating the reaction rate between the solid base and the solid aluminum salt.

In some embodiments, S200 comprises: providing the solid aluminum salt and a surfactant to the positive electrode active material particles; optionally, the surfactant comprises one or more of polyethylene glycol, oleic acid-oleamide, dodecanol, and hexadecanol.

Thus, by adding the surfactant in the present application, it is beneficial to increasing the contact interface between the solid aluminum salt and the solid base, and facilitates the solid base to directionally select the crystalline surface of the solid aluminum salt for the reaction, which is able to accelerate the reaction and improve the reaction rate.

In some embodiments, the ratio of the molar percentage of the surfactant to the molar percentage of the solid aluminum salt is denoted as p, based on the total molar amount of the solid aluminum salt and the surfactant, 0.1 ≤ p ≤ 2; optionally, 0.5 ≤ p ≤ 1. Thereby, when p of the present application is in the above range, the surfactant is able to sufficiently wet the solid aluminum salt and the solid base and the content of the surfactant will not be added excessively, reducing the effect on the positive electrode active material during the subsequent removal of the surfactant; and the above range is conducive to improving the morphology of the formed cladding layer, with a uniform particle size of the alumina in the cladding layer, a more uniform thickness of the cladding layer as a whole, and a better overall covering effect on the surface of the positive electrode active material.

In some embodiments, the method further comprises S400, washing the composite positive electrode active material with a detergent to remove by-products in the composite positive electrode active material; S500, drying the washed composite positive electrode active material to remove the detergent.

Accordingly, the present application employs a detergent to wash the composite positive electrode active material to remove by-products and residual reaction ingredients, thereby improving the purity of the composite positive electrode active material and reducing the risk of a side reaction between the composite positive electrode active material and the electrolytic solution when applied to the secondary battery, and ensuring the electrochemical performance of the secondary battery.

In some embodiments, the detergent comprises an alcohol solvent and/or a ketone solvent; optionally, the alcohol solvent comprises methanol and/or ethanol; optionally, the ketone solvent comprises acetone and/or methyl ethyl ketone. The above detergent has good solubility with solid base and the like, and can effectively remove solid base and the like, thereby improving the purity of the composite positive electrode active material.

A second aspect of the present application provides a composite positive electrode active material prepared by the method described in any of the embodiments of the first aspect of the present application.

In some embodiments, a mass percentage of the cladding layer is denoted as A%, based on a total mass of the composite positive electrode active material, and the composite positive electrode active material satisfies: 0.05 ≤ A ≤ 1.

When the mass percentage A% of the cladding layer is in the above range, good protection of the positive electrode active material particles can be ensured; and the cladding layer will not be over-coated, so as to ensure that the lithium ions can smoothly intercalate or deintercalate through the cladding layer.

In some embodiments, the composite positive electrode active material satisfies at least one of conditions (3) to (7): (3) the cladding layer has a thickness denoted as H nm, 5 ≤ H ≤ 30; (4) the alumina nanoparticles has an average size denoted as D1 nm, 5 ≤ D1 ≤ 30; (5) the composite positive electrode active material has an volume-averaged particle size of Dv50, denoted as D2 µm, 6 ≤ D2 ≤ 10; (6) the composite positive electrode active material has a BET specific surface area denoted as S mm²/g, 1 ≤ S ≤ 3; (7) the cladding layer has a covering rate denoted as B%, with 96 ≤ B ≤ 99.8, wherein the covering rate is the ratio of the inner surface area of the cladding layer occupying the outer surface area of the positive electrode active material particles.

As a result, the present application is able to improve the electrochemical performance of the composite positive electrode active material by regulating the parameters of the composite positive electrode active material.

A third aspect of the present application provides a secondary battery comprising a composite positive electrode active material as described in any of the embodiments of the second aspect of the present application.

A fourth aspect of the present application provides an electric device comprising a secondary battery as described in the third aspect of the present application.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of the secondary battery as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electric device comprising a secondary battery of the present application as a power source.
FIG. 7 is a scanned image of the composite positive electrode active material prepared in Example 1, Comparative Example 1 and Comparative Example 2.
FIG. 8 is a Mapping image of the composite positive electrode active material prepared in Example 1.
FIG. 9 is an XRD spectrum of the composite positive electrode active material prepared in Example 1 and the positive electrode active material NCM.

The drawings are not drawn to actual scale.

Reference numerals are as follows:
1. Battery pack; 2. Upper box body; 3. Lower box body; 4. Battery module;
5. Secondary battery; 51. Housing; 52. Electrode assembly;
53. Cover plate;
6. Electric device.

### DETAILED DESCRIPTION

Hereinafter, embodiments of the composite positive electrode active material, method for preparing the same, and electric device comprising the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps S1001 and S1002, indicating that the method may include steps S1001 and S1002 performed in sequence, or that the method may include steps S1002 and S1001 performed in sequence. For example, reference to the method further comprising step S1003 indicates that step S1003 may be added to the method in any order. As an example, the method may comprises steps S1001, S1002 and S1003, steps S1001, S1003 and S1002, or steps S1003, S1001 and S1002, and the like.

Unless stated otherwise, the transition phases "comprise", "comprising", "contain" and "containing" mentioned in the present application mean that it is drafted in an open-ended mode, or it may also mean a close-ended mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, the term "more than one" means two or more, unless otherwise stated and specifically limited.

The stability of the material structure of the positive electrode active material, as a lithium intercalated compound and a party providing active lithium ions, has a direct impact on the performance of the secondary battery. During the charging and discharging cycle of the secondary battery, the positive electrode active material may decompose to result in oxygen release, and the released oxygen has the risk of igniting the flammable electrolytic solution when heat is accumulated, triggering a safety risk of the secondary battery. In order to improve the structural stability of positive electrode active materials, it is usually possible to cover the surface of positive electrode active materials in order to improve the performance of secondary batteries in which positive electrode active materials are used. It has been found that an alumina cladding layer on the surface of positive electrode active materials can effectively improve the cycling performance and charge/discharge performance of positive electrode active materials; the reason is that the alumina cladding layer can inhibit the diffusion of HF in the electrolytic solution in the cycling process, which comes from the decomposition of the electrolytic solution, i.e., the alumina can alleviate the decomposition of the electrolytic solution to a certain degree, thus reducing the impedance and improving the electrochemical performance of the material, and it can improve the cycling performance of secondary battery. Furthermore, after the alumina cladding is applied, the voltage difference between the charging voltage and the discharging voltage of the secondary battery increases, and the heat generation decreases, which can inhibit the closure of the micropores of the separator and improve the permeability efficiency of the separator, thus improving the charging and discharging performance of the secondary battery.

However, the inventors have found that the current process of applying alumina on the surface of the positive electrode active material requires high temperature sintering, and the high temperature sintering may lead to deoxygenation of the positive electrode active material to be reduced, destroying the structure of the positive electrode active material, thereby causing the electrochemical performance of the positive electrode active material to decrease significantly; and the existing cladding process also has a situation where the coating is not uniform, resulting in some areas of the cladding layer having a thicker thickness, and some areas having a thinner thickness, or even no cladding at all, thus making the overall positive electrode active material not effectively protected; and the high temperature sintering process has a high cost and high energy consumption.

In view of this, the inventors have improved the cladding process and proposed a method for preparing a composite positive electrode active material, wherein the method does not use high temperature sintering, and uniform cladding of the surface of the positive electrode active material can be realized at a relatively low temperature, so as to effectively protect the positive electrode active material, and ensure the electrochemical performance of the positive electrode active material. The method is described in detail next.

### Method for Preparing a Composite Positive Electrode Active Material

In a first aspect, the present application proposes a method for preparing a composite positive electrode active material.

The method comprises:
S100, providing positive electrode active material particles;
S200, providing a solid aluminum salt to the positive electrode active material particles so that the solid aluminum salt covers a surface of the positive electrode active material particles;
S300, providing a solid base to the positive electrode active material particles covered by the solid aluminum salt to enable an in-situ solid-phase chemical reaction between the solid aluminum salt and the solid base and to generate a cladding layer covering the surface of the positive electrode active material particles, and to obtain a composite positive electrode active material, wherein the cladding layer comprises alumina nanoparticles.

In step S100, the positive electrode active material particles may be positive electrode active materials for secondary batteries known in the art. As an example, the positive electrode active material may include at least one of the following materials: a positive electrode active material with a layered structure (e.g., a ternary, lithium/sodium nickel oxide, lithium/sodium cobalt oxide, lithium/sodium manganese oxide, lithium/sodium-rich layered material, and rock-salt phase layered material, etc.), an olivine-type phosphate active material, and a spinel-structured positive electrode active material (e.g., spinel lithium manganese, spinel lithium nickel manganese, lithium-rich spinel lithium manganese and lithium nickel manganese, and the like).

As an example, the general formula of the layered positive electrode active material is: LiₓA_{y}NiₐCo_{b}Mn_{c}M_{(1-a-b-c)}Y_{z}, in which 0≤x≤2.1, 0≤y≤2.1, and 0.9≤x+y≤2.1; 0≤a≤1, 0≤b≤1, 0≤c≤1, and 0.1≤a+b+c≤1; 1.8≤z≤3.5; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Optionally, 0 < x ≤ 2.1, and y = 0. Specifically, the layered positive electrode active material may include one or more of lithium cobalt oxide (LCO), lithium nickel oxide (LNO), lithium manganese oxide (LMO), LiNi_{1/3}Co_{1/3}Mn_{1/3}O₂ (NCM333), LiNi_{0.8}Co_{0.1}Mn_{0.1}O₂ (NCM811), and LiNi_{0.5}Co_{0.2}Mn_{0.3}O₂ (NCM523). As an example, the general formula of the olivine-type phosphate active material is LiₓA_{y}MeₐM_{b}P_{1-c}X_{c}Y_{z}, in which 0 ≤ x ≤ 1.3, 0 ≤ y ≤ 1.3, and 0.9 ≤ x + y ≤ 1.3; 0.9 ≤ a ≤ 1.5, 0 ≤ b ≤ 0.5, and 0.9 ≤ a + b ≤ 1.5; 0 ≤ c ≤ 0.5; 3 ≤ z ≤ 5; A is selected from one or more of Na, K, and Mg; Me is selected from one or more of Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from S, Si, Cl, B, C, and N; and Y is selected from one or more of O, and F. Specifically, the olivine-type phosphate active material includes one or more of LiFePO₄, LiMnPO₄, LiNiPO₄, and LiCoPO₄. As an example, the general formula of the spinel positive electrode active material is LiₓA_{y}MnₐM₂₋ₐY_{z}, in which 0 ≤ x ≤ 2, 0 ≤ y ≤ 1, and 0.9 ≤ x + y ≤ 2; 0.5 ≤ a ≤ 2; 3 ≤ z ≤ 5; A is selected from one or more of Na, K, and Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O, and F. Specifically, the positive electrode active material with a spinel structure includes one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄, and Li_{1.5}Mn₂O₄.

In Step S200, the solid aluminum salt is an aluminum salt that may be in the form of a solid, which may include one or more of aluminum sulfate, aluminum nitrate, aluminum chloride, and the like. The solid aluminum salt is provided to the positive electrode active material particles, and the solid aluminum salt and the positive electrode active material particles are mixed homogeneously so as to uniformly cover the surface of the positive electrode active material particles with the solid aluminum salt.

In step S300, the solid base is a base that may be in the form of a solid, which may include one or more of sodium hydroxide, potassium hydroxide, and the like. The solid base is mixed with the positive electrode active material particles, the solid base can have a solid-phase chemical reaction (e.g., a low-heat solid-phase chemical reaction) with the solid aluminum salt, which has the advantages of a high yield, a simple process, etc., and the alumina particles formed in the reaction are homogeneous with a relatively regular appearance. Due to that the surface of the positive electrode active material is covered with the solid aluminum salt, the solid base can react with the solid aluminum salt on the surface of the positive electrode active material in the in-situ solid-phase chemical reaction, so that the generated alumina can directly cover the surface of the positive electrode active material; the generated alumina is a nano-scale particle, which can uniformly cover the surface of the positive electrode active material, and thus can play a good protective role for the positive electrode active material. The alumina nanoparticles generated by the in-situ reaction have a strong bonding force with the positive electrode active material and are not easy to fall off from the surface of the positive electrode active material, so that they can more effectively protect the positive electrode active material, reduce the risk of side reactions occurring in the contact between the positive electrode active material and the electrolytic solution and to a certain extent, inhibit the release of oxygen from the positive electrode active material at high temperatures, reduce the leaching of the transition metal, and further improve the structural stability of the positive electrode active material. The structural stability of the active material can be further improved by reducing the dissolution of transition metals.

In view of the fact that the alumina generated by the chemical reaction may be doped with water, it may be dried by drying means; i.e., the composite positive electrode active material is dried after generating a cladding layer on the surface of the positive electrode active material particles.

The low-heat solid-phase chemical reaction refers to a chemical reaction between a solid and a solid substance at or near room temperature, which generally undergoes four stages, i.e., diffusion-reaction-nucleation-growth, and in the course of the reaction, the solid base is able to enter into the interior of the solid aluminum salt so as to undergo the reaction; the low-heat solid-phase reaction is not subjected to chemical equilibrium, and its reaction yield is higher; in order to further accelerate the reaction speed, grinding or other means can be used to improve the solid-solid contact interface between solid base and solid aluminum salt. During the grinding process, heat is generated, and the materials become wet and sticky, which means that a chemical reaction has occurred. The reaction efficiency of the low-heat solid-phase chemical reaction can be basically close to 100% with high yield.

In the present application, by pre-coating the surface of the positive electrode active material particles with the solid aluminum salt, the solid base and the solid aluminum salt can generate alumina by solid-phase chemical reaction on the surface of the positive electrode active material particles, and the alumina uniformly cover the surface of the positive electrode active material particles, which can play a good protective role for the positive electrode active material as a whole to ensure the structural stability of the positive electrode active material. When the positive electrode active material is applied to the secondary battery, the cycling performance and thermal stability of the secondary battery can be improved. Moreover, the method of the present application has a simple production process, low cost and energy consumption, and a high yield of the prepared alumina.

In some embodiments, in step S100, the general formula of the positive electrode active material particles is LiₓNiₐCo_{b}Mn_{c}O₂, in which 0 ≤ x ≤ 2.1, 0 ≤ a ≤ 1, 0 ≤ b ≤ 1, 0 ≤ c ≤ 1, and 0.1 ≤ a + b + c ≤ 1.

As an example, a may be 0, 0.1, 0.2, 0.3, 0.4, 0.5, 0.6, 0.7, 0.8, 0.9, 1, or in a range consisting of any two of the above values. For example, 0 < a ≤ 1, 0.6 ≤ a ≤ 0.8 or 0.6 ≤ a < 0.8.

As an example, b may be 0, 0.1, 0.2, 0.3, 0.4, 0.5, 0.6, 0.7, 0.8, 0.9, 1 or in a range consisting of any two of the above values. For example, 0 < b ≤ 1.

As an example, c may be 0, 0.1, 0.2, 0.3, 0.4, 0.5, 0.6, 0.7, 0.8, 0.9, 1 or in a range consisting of any two of the above values. For example, 0 < c ≤ 1.

Ni of the above-described positive electrode active material is capable of providing electrons required for electrochemistry, which contributes to the improvement of the capacity; Co is capable of improving the electrical conductivity as well as the rate performance of the material; Mn is conducive to the improvement of the safety performance, and the synergistic effect of the three elements results in a higher structural stability and a higher capacity. The surface of the above positive electrode active material is further covered with alumina nanoparticles, and the alumina nanoparticles can provide good protection for the above materials, thereby improving the cycling performance and the charging and discharging performance of the secondary battery.

In some embodiments, in step S200, the solid aluminum salt includes one or more of aluminum sulfate, aluminum nitrate, and aluminum chloride. The force between the lattice of the above solid aluminum salt is relatively weak, and the binding force of the chemical bond of the atoms (or ions or molecules) is weak, so that at a lower temperature, an external substance, such as a solid base, can enter into the interior of the lattice and react, which is conducive to the occurrence of a chemical reaction between the solid base and the solid aluminum salt, and to improving the reaction rate and reaction yield.

In some embodiments, in step S200, the solid aluminum salt is provided to the positive electrode active material particles under ball milling, and the rotation speed of the ball milling is from 200 r/min to 800 r/min; and/or the ball milling time is from 0.5h to 6h.

The raw material of the solid aluminum salt may have a large particle size, for example, it may be of micrometer level, the solid aluminum salt is ball milled to further reduce its particle size to the nanometer level, the reaction rate between the nanometer-level solid aluminum salt and the solid base is faster and it is capable of generating nanometer-level alumina particles, which further improves the covering effect on the positive electrode active material.

As an example, the rotation speed of the ball mill may be 200 r/min, 220 r/min, 250 r/min, 280 r/min, 300 r/min, 350 r/min, 400 r/min, 450 r/min, 500 r/min, 550 r/min, 600 r/min, 650 r/min, 700 r/min, 750 r/min, or 800 r/min; or the rotation speed of the ball mill may be a range consisting of any two of the above values.

As an example, the ball milling time may be 0.5h, 0.52h, 0.55h, 0.58h, or 0.6h; or the ball milling time may be a range consisting of any two of the above values.

In some embodiments, a relatively short ball milling time may be used when the rotation speed of the ball milling is relatively high, e.g., the rotation speed of the ball milling is 200 r/min, and the ball milling time may be 0.6h; and a relatively long ball milling time may be used when the rotation speed of the ball milling is relatively short, e.g., the rotation speed of the ball milling is 800 r/min, and the ball milling time may be 0.5h.

In some embodiments, the mass percentage of the aluminum salt is denoted as m wt%, based on the total mass of the solid aluminum salt and the positive electrode active material particles, and 0.05 ≤ m ≤ 10.

Due to the in-situ solid-phase reaction between the solid aluminum salt and the solid base, the amount of solid aluminum salt required for the reaction is less and it is easier to generate a uniformly distributed cladding layer.

When the mass percentage m wt% of the solid aluminum salt is in the above range, the alumina particles generated by the solid aluminum salt and the solid base can sufficiently cover the surface of the positive electrode active material particles, reducing the risk of the positive electrode active material coming into contact with the electrolytic solution and having a side reaction, so as to ensure the electrochemical performance of the secondary battery; and the thickness of the cladding layer is not excessively thick, so as to ensure that the lithium ions smoothly migrate from the electrolytic solution to the positive electrode active material through the cladding layer, or migrate from the positive electrode active material to the electrolytic solution, thereby further ensuring the electrochemical performance of the secondary battery. Exemplarily, the mass percentage m wt% of the aluminum salt may be 0.05 wt%, 0.08 wt%, 0.1 wt%, 0.12 wt%, 0.15 wt%, 0.20 wt%, 0.25 wt%, 0.30 wt%, 0.35 wt%, 0.40 wt%, 0.45 wt%, 0.5 wt%, 0.55 wt%, 0.60 wt%, 0.65wt%, 0.70wt%, 0.80wt%, 0.90wt%, or 10wt%; or a range consisting of any two of these values.

In some embodiments, step S200 can include: providing the solid aluminum salt and the surfactant to the positive electrode active material particles.

The addition of the surfactant facilitates increasing the contact interface between the solid aluminum salt and the solid base, and facilitates the solid base to directionally select the crystalline surface of the solid aluminum salt for the reaction, which can accelerate the reaction and increase the reaction rate.

Optionally, the surfactant comprises one or more of polyethylene glycol, oleic acid-oleamide, dodecanol, and hexadecanol; the above surfactants have better wetting properties and can further accelerate the reaction rate.

Optionally, the ratio of the molar percentage of the surfactant to the molar percentage of the solid aluminum salt is denoted as p, 0.1 ≤ p ≤ 2, based on the total molar amount of the solid aluminum salt and the surfactant.

The molar percentage of the surfactant is the percentage of the total molar amount of the solid aluminum salt and the surfactant occupied by the molar amount of the surfactant, and the molar percentage of the solid aluminum salt is the percentage of the total molar amount of the solid aluminum salt and the surfactant occupied by the molar amount of the solid aluminum salt.

When the ratio p of the molar percentage of the surfactant to the molar percentage of the solid aluminum salt is in the above range, the surfactant is able to sufficiently wet the solid aluminum salt and the solid base, and the amount thereof is not added excessively, so as to reduce the influence on the positive electrode active material in the process of removing the surfactant in the subsequent period; moreover, the above range is conducive to improving the morphology of the cladding layer formed, the particle size of the alumina in the cladding layer is uniform, the overall thickness of the cladding layer is more uniform, and the overall covering effect on the surface of the positive electrode active material is better. Optionally, 0.5 ≤ p ≤ 1. Exemplarily, the ratio p of the molar percentage of the surfactant to the molar percentage of the solid aluminum salt may be 0.1, 0.2, 0.5, 0.6, 0.8, 0.9, 1, 1.2, 1.5, 1.8, 1.9, or 2; or a range consisting of any two of the above values.

In some embodiments, in step S300, the solid base may comprise sodium hydroxide and/or potassium hydroxide. The above bases are more alkaline, which facilitates a rapid reaction with the solid aluminum salt to generate alumina.

In some embodiments, in step S300, the solid base is provided to the positive electrode active material covered by the solid aluminum salt under ball milling at a rotation speed of from 200 r/min to 800 r/min, and/or a ball milling time of from 0.5h to 6h.

The ball milling is conducive to increasing the contact interface between the solid base and the solid aluminum salt, thereby accelerating the reaction rate of the solid base and the solid aluminum salt.

As an example, the rotation speed of the ball mill may be 200 r/min, 220 r/min, 250 r/min, 280 r/min, 300 r/min, 350 r/min, 400 r/min, 450 r/min, 500 r/min, 550 r/min, 600 r/min, 650 r/min, 700 r/min, 750 r/min, or 800 r/min; or may be a range consisting of any two of the above values.

As an example, the ball milling time may be 0.5h, 0.52h, 0.55h, 0.58h, or 0.6h; or may be a range consisting of any two of the above values.

In some examples, a relatively short ball milling time may be used when the rotation speed of the ball milling is relatively high, e.g., the rotation speed of the ball milling is 200 r/min, and the ball milling time may be 0.6h; and a relatively long ball milling time may be used when the rotation speed of the ball milling is relatively short, e.g., the rotation speed of the ball milling is 800 r/min, and the ball milling time may be 0.5h.

In some embodiments, in step S300, the solid aluminum salt and the solid base undergo an in-situ solid-phase chemical reaction by heat treatment, and the heat treatment comprises condition (1) and/or condition (2): (1) the temperature T°C of the heat treatment satisfies: T ≤ 100; optionally, 20 ≤ T ≤ 50; and (2) the time S min of the heat treatment satisfies: 30 ≤ S ≤ 60; optionally, 30 ≤ S ≤ 40.

Appropriately increasing the temperature of the reaction system is conducive to accelerating the reaction rate of the solid aluminum salt and the solid base, and when the heat treatment temperature T°C is in the above range, it basically does not cause the decomposition of the positive electrode active material, which can ensure the structural stability of the positive electrode active material. As an example, the temperature T°C of the heat treatment may be 20°C, 25°C, 30°C, 35°C, 40°C, 45°C, 50°C, 60°C, 70°C, 80°C, 90°C, or 100°C; or a range consisting of any two of the above values.

When the time S min of the heat treatment is in the above range, it is possible to ensure that the reaction occurs sufficiently so that the alumina generated by the reaction sufficiently covers the surface of the positive electrode active material. The time S min of the heat treatment may be 30 min, 35 min, 40 min, 45 min, 50 min, 55 min, or 60 min; or a range consisting of any two of the above values.

The temperature T°C of the heat treatment and the time S min of the heat treatment may be coupled to each other, with a relatively small time of heat treatment being coupled to a higher temperature T°C of the heat treatment, and a relatively long time of heat treatment time being coupled to a lower temperature T°C of the heat treatment.

In some embodiments, the ratio of the molar percentage of the solid aluminum salt to the molar percentage of the solid base is denoted as n, 0.02 ≤ n ≤ 1, based on the total molar amount of the solid aluminum salt and the solid base.

The molar percentage of the solid aluminum salt is the percentage of the total molar amount of the solid aluminum salt occupying the total molar amount of the solid aluminum salt and the solid base, and the molar percentage of the solid base is the percentage of the total molar amount of the solid base occupying the total molar amount of the solid aluminum salt and the solid base.

When the ratio n of the molar percentage of the solid aluminum salt to the molar percentage of the solid base is in the above range, the molar amount of the solid base is relatively high, the solid-phase chemical reaction is faster, heat will be released in the system in time, and the system will become wetter, thus accelerating the generation of alumina and improving the reaction rate; and the reaction at the above ratio is able to regulate the morphology of the cladding layer, and the particle size of the alumina particles is more uniform, and the covering effect on the positive electrode active material is better. Moreover, the content of solid base is not excessively high, and it is not easy to have residue after the reaction between the solid base and the solid aluminum salt, so as to reduce the problem of deterioration of the electrochemical performance due to the side reaction between the residual solid base and the electrolytic solution, and ensure the electrochemical performance of the secondary battery containing the composite positive electrode active material. Optionally, 0.2 ≤ n ≤ 1. As an example, the ratio n of the molar percentage of the solid aluminum salt to the molar percentage of the solid alkali may be 0.02, 0.05, 0.1, 0.2, 0.3, 0.4, 0.5, 0.6, 0.7, 0.8, 0.9, or 1; or a range consisting of any two of the above values.

In some embodiments, the method further comprises:
S400, washing the composite positive electrode active material with a detergent to remove byproducts from the composite positive electrode active material;
S500, drying the washed composite positive electrode active material to remove the detergent.

In the preparation of the composite positive electrode active material, the formation of by-products may be accompanied by residual reaction materials such as solid base, etc., and the composite positive electrode active material is washed with a detergent to remove the by-products and residual reaction materials, so as to improve the purity of the composite positive electrode active material and reduce the risk of side reaction between the composite positive electrode active material and the electrolytic solution when it is applied to the secondary battery, thus ensuring the electrochemical performance of the secondary battery.

Optionally, the detergent comprises an alcohol solvent and/or a ketone solvent; as an example, the alcohol solvent comprises methanol and/or ethanol; and the ketone solvent comprises acetone and/or methyl ethyl ketone. The above detergents have good solubility with solid bases and the like, and can effectively remove solid bases and the like, thereby improving the purity of the composite positive electrode active material.

Optionally, the temperature of the drying treatment may be greater than or equal to the boiling point of the detergent, for example, from 80°C to 100°C. The drying treatment is intended to evaporate the detergent to reduce the effect of the introduction of the detergent on the secondary battery. For example, when the detergent is ethanol, the temperature of the drying treatment may be 80°C.

### Composite Positive Electrode Active Material

In a second aspect, the present application provides a composite positive electrode active material.

The composite positive electrode active material can be prepared by the method described in any of the embodiments according to the first aspect of the present application; the positive electrode active material in the composite positive electrode active material can be covered by alumina nanoparticles, so as to be able to play a good protective role for the positive electrode active material and to ensure the structural stability of the positive electrode active material.

In some embodiments, based on the total mass of the composite positive electrode active material, a mass percentage of the cladding layer is denoted as A%, and the composite positive electrode active material satisfies: 0.05≤A≤1.

When the mass percentage A% of the cladding layer is in the above range, good protection of the positive electrode active material particles can be ensured; and the cladding layer will not be over-coated, so as to ensure that the lithium ions can smoothly migrate in or out through the cladding layer. Optionally, 0.1 ≤ A ≤ 0.5. As an example, the mass percentage A% of the cladding layer may be 0.05%, 0.08%, 0.10%, 0.15%, 0.18%, 0.20%, 0.30%, 0.40%, 0.50%, 0.60%, 0.70%, 0.80%, 0.90%, or 1%; or a range consisting of any two of the above values.

In some embodiments, the cladding layer has a thickness denoted as H nm, 5 ≤ H ≤ 30.

When the thickness of the cladding layer is in the above range, it can provide good protection for the positive electrode active material and ensure the structural stability of the positive electrode active material; the thickness thereof will not be excessively thick, and the interfacial impedance between the positive electrode active material and the electrolytic solution will not be excessively high, which is conducive to improving the kinetic performance of the secondary battery and facilitating the migration of lithium ions, thereby ensuring the electrochemical performance of the secondary battery.

The thickness of the cladding layer has a meaning well-known in the art, and can be tested using instruments and methods known in the art, for example, taking a certain amount of the composite positive electrode active material prepared as described above, cutting a thin slice of about 100 nm from the middle of the individual particle, and then subjecting the thin slice to a Transmission Electron Microscope (TEM for short) analysis test to obtain a TEM image, and then measuring the thickness of a plurality (e.g., more than 30) of different positions on the TEM image and taking the average value thereof as the average thickness of the cladding layer. From the TEM image, it can be seen that there are obvious grain boundaries between the cladding layer and the internal positive electrode active material.

In some embodiments, the alumina nanoparticles have an average particle size denoted as D1 nm, 5 ≤ D1 ≤ 30.

The average particle size of the alumina nanoparticles has a meaning well-known in the art, can be tested using instruments and methods known in the art, and can be analyzed and tested using a scanning electron microscope (SEM) to obtain SEM images, and then counting the sizes and drawing a normal distribution curve to obtain the average particle size.

When the average particle size of the alumina nanoparticles is in the above range, it facilitates the uniform distribution of the alumina nanoparticles, which is conducive to the improvement of uniform covering on the surface of the positive electrode active material.

In some embodiments, the composite positive electrode active material has a volume average particle size Dv50 denoted as D2 µm, 6≤D2≤10.

By adjusting the volume average particle size Dv50 of the composite positive electrode active material within the suitable range, it is favorable for the composite positive electrode active material to have better ion and electron transport performance and fast charging performance s, as well as a high powder compaction density. As an example, the volume average particle size Dv50 D2 µm of the composite positive electrode active material may be 6 µm, 6.5 µm, 7 µm, 7.5 µm, 8 µm, 8.5 µm, 9 µm, 9.5 µm, or 10 µm; or a range consisting of any two of the above values.

The volume average particle size Dv50 of the composite positive electrode active material has a meaning well known in the art, which indicates a particle size when a cumulative volume distribution percentage of a material reaches 50%, and can be tested by instruments and methods well known in the art. For example, they can be conveniently measured by a laser particle size analyzer, such as Mastersizer 2000E type laser particle size analyzer of Malvern Instruments Co., Ltd., UK, with reference to the GB/T 19077-2016 entitled "Method for Determining Particle Size Distribution by Laser Diffraction".

In some embodiments, the composite positive electrode active material has a BET specific surface area denoted as S mm²/g, 1 ≤ S ≤ 3.

By adjusting the BET specific surface area of the composite positive electrode active material within the suitable range, it is possible to reduce interfacial side reactions between the positive electrode plate employing such composite positive electrode active material and the electrolytic solution, while also making the positive electrode plate employing such composite positive electrode active material have a suitable electrochemical reactivity, which can result in a secondary battery with a higher charging capacity. As an example, the BET specific surface area of the composite positive electrode active material may be 1 mm²/g, 1.5 mm²/g, 2 mm²/g, 2.5 mm²/g, or 3 mm²/g; or a range consisting of any two of the above values.

The BET specific surface area of the composite positive electrode active material has a well-known meaning in the art, and can be tested using instruments and methods known in the art, for example, a nitrogen adsorption specific surface area analysis test method with reference to GB/T 19587-2017 as follows: taking the negative electrode active material as a sample, and submerging the sample tube in liquid nitrogen having a temperature of -196°C, and measuring the surface area of the composite positive electrode active material at 0.05-0.30 relative pressure to determine the adsorption amount of nitrogen on the solid surface under different pressures, and based on the BET multilayer adsorption theory and its formula, calculating the adsorption amount of the single molecule layer of the specimen, so as to calculate the specific surface area of the negative electrode active material.

In some embodiments, the cladding layer has a covering rate denoted as B%, 96 ≤ B ≤ 99.8, wherein the covering rate is a ratio of the inner surface area of the cladding layer occupying an outer surface area of the positive electrode active material particles.

A covering rate in the above range ensures more adequate protection of the positive electrode active material and is favorable for ensuring migration of lithium ions, thereby ensuring the kinetic performance of the secondary battery in which it is used. As an example, the covering rate B% of the cladding layer may be 96%, 96.5%, 97%, 97.5%, 98%, 98.5%, 99%, 99.5%, or 99.8%; or a range consisting of any two of the above values.

The testing of the covering rate can be performed using SEM and TEM to observe the crystalline structure and thereby determine the covering area to calculate the covering rate.

### Positive Electrode Plate

In a third aspect, the present application provides a positive electrode plate.

In some embodiments, the positive electrode plate comprises a positive electrode current collector and a positive electrode film provided on at least one surface of the positive electrode current collector. For example, the positive electrode current collector has two surfaces opposite to each other in the direction of its own thickness, and the positive electrode film is provided on either or both of two opposite surfaces of the positive electrode current collector. The positive electrode film layer comprises a composite positive electrode active material according to any of the embodiments of the first aspect of the present application or a composite positive electrode active material prepared by the method according to any of the embodiments of the second aspect of the present application.

In some embodiments, the positive electrode film may further include a positive electrode conductive agent. There is no particular limitation on the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on a total mass of the positive electrode film, the positive electrode conductive agent has a mass percentage of 5% or less.

In some embodiments, the positive electrode film may further include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film, the positive electrode binder has a mass percentage of 5% or less.

In some embodiments, the positive electrode current collector may be a metal foil or composite current collector. As an example of the metal foil, an aluminum foil or aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy. The polymer material base layer may include one or more of polypropylene (PP), polyethylene terephthalate (PET), polybutylene terephthalate (PBT), polystyrene (PS), and polyethylene (PE).

The positive electrode film is usually formed by applying a positive electrode current collector with a positive electrode slurry, drying, and cold pressing. The positive electrode slurry is usually formed by dispersing a positive electrode active material, an optional conductive agent, an optional binder, and any other components in a solvent and stirring evenly. The solvent may be N-methylpyrrolidone (NMP), but is not limited thereto.

### Secondary battery

In a fourth aspect, the present application provides a secondary battery.

The secondary battery comprises a positive electrode plate, a negative electrode plate, and a separator. The separator is disposed between the positive electrode plate and the negative electrode plate to play a role in isolating the positive electrode plate and the negative electrode plate. The positive electrode plate may adopt the positive electrode plate according to any of the embodiments of the third aspect of the present application, so the cycling performance and the charging and discharging performance of the secondary battery can be improved.

### Negative electrode plate

The negative electrode plate comprises a negative electrode current collector and a negative electrode film provided on at least one surface of the negative electrode current collector, the negative electrode film comprising a negative electrode active material.

As an example, the negative electrode current collector has two surfaces opposite to each other in the direction of its own thickness, and the negative electrode film is provided on either or both of two opposite surfaces of the negative electrode current collector.

In some embodiments, the negative electrode current collector may be a metal foil or composite current collector. As an example of the metal foil, a copper foil may be used. The composite current collector may include a polymer material base layer and a metal material layer formed on at least one surface of the polymer material base layer. The composite current collector can be formed by forming metallic materials (copper, copper alloy, nickel, nickel alloy, titanium, titanium alloys, silver and silver alloy, etc.) onto a polymer material base layer (the base layer such as polypropylene (PP), polyethylene terephthalate (PET), polybutylene terephthalate (PBT), polystyrene (PS), and polyethylene (PE), etc.).

In some embodiments, the negative electrode active material may be a negative electrode active material known in the art for use in batteries. By way of example, the negative electrode active material includes, but is not limited to, one or more of natural graphite, artificial graphite, soft carbon, hard carbon, silicon-based material, tin-based material, lithium titanate, and the like. The silicon-based material may include at least one of elemental silicon, a silicon oxide, a silicon carbon composite, a silicon nitrogen composite, or a silicon alloy. The tin-based materials may include at least one of elemental tin, a tin oxide, or a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode film may further optionally comprise a binder. The binder may include at least one of styrene-butadiene rubber (SBR), polyacrylic acid (PAA), polyacrylic acid sodium salt (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film may further optionally include a conductive agent. The conductive agent includes one or more of superconducting carbon, acetylene black, carbon black, Ketjen black, carbon dots, carbon nanotubes, graphene, and carbon nanofibers.

In some embodiments, the negative electrode film may optionally include other additives, such as thickeners (sodium carboxymethyl cellulose (CMC-Na)), etc.

In some embodiments, the negative electrode plate may be prepared by the following method: dispersing the components for preparing the negative electrode plate, such as a negative electrode active material, a conductive agent, a binder, and any other components in a solvent (such as deionized water) to form a negative electrode slurry; and applying a negative electrode current collector with the negative electrode slurry and obtaining the negative electrode plate after drying, cold pressing, and other procedures.

### Electrolytic solution

The electrolytic solution of the present application may be an electrolytic solution known in the art for use in secondary batteries. The electrolytic solution includes a lithium salt and an organic solvent.

As an example, the lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

As an example, the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethylsulfonylethane (ESE).

### Separator

There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film. When the separator is a multi-layer composite thin film, materials of various layers may be the same or different.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolytic solution.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as at least one of polypropylene (PP), polybutylene terephthalate (PBT), and polybutylene succinate (PBS).

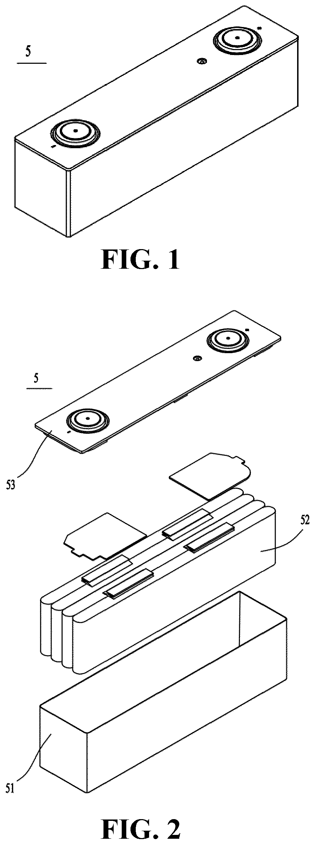

The shape of the secondary battery is not particularly limited in the present application, and it may be cylindrical, square, rectangular or any other shape. FIG. 2 is a schematic diagram of a secondary battery 5 with a rectangular structure as an example.

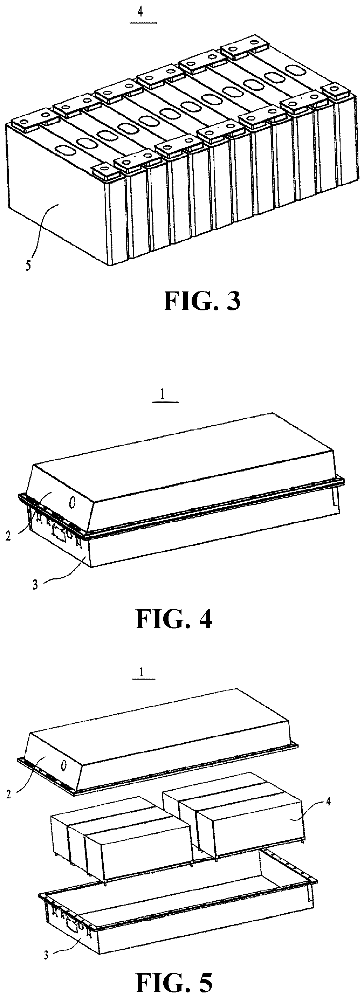

In some embodiments, as shown in FIG. 3, the outer package may include a casing 51 and a cover plate 53, wherein the casing 51 may include a bottom plate and side plates connected to the bottom plate, and the bottom plate and the side plates enclose and form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

FIG. 4 is a schematic diagram of the battery module 4 as an example. As shown in FIG. 4, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

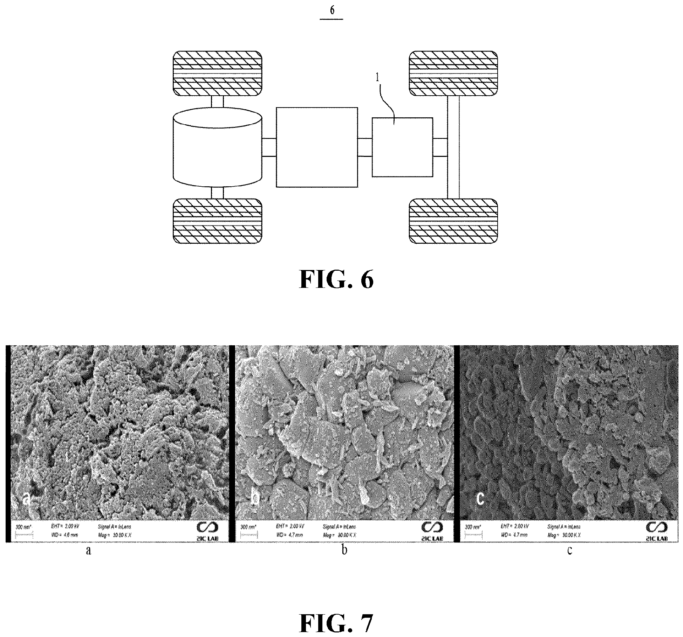

FIGS. 5 and 6 are schematic diagrams of the battery pack 1 as an example. As shown in FIGS. 5 and 6, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electric device

In a fifth aspect, the present application further provides an electric device comprising at least one of the secondary battery, battery module, and battery pack of the present application. The secondary battery, battery module or battery pack can be used as a power source of the electric device, and can also be used as an energy storage unit of the electric device. The electric device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electric device can select a secondary battery, a battery module or a battery pack according to its usage requirements.

FIG. 7 is a schematic diagrams of an electric device as an example. The electric device 6 is a pure electric vehicle, a hybrid electric vehicle, or a plug-in hybrid electric vehicle. In order to meet high power and high energy density requirements of the electric device, a battery pack 1 or a battery module can be used.

As another example, the electric device may be a mobile phone, a tablet computer, a notebook computer, and the like. The electric device is generally required to be light and thin, and a secondary battery can be used as a power source.

### Examples

Below, examples of the present application are described. The examples described below are exemplary and are intended to be used only for the purpose of explaining the present application and are not to be construed as a limitation of the present application. Where specific techniques or conditions are not indicated in the examples, they are in accordance with the techniques or conditions described in the literature in the art or in accordance with the product specification. Where no manufacturer is indicated for the reagents or instruments used, they are conventional products that can be obtained through commercially available purchases.

### Example 1

### 1. Preparation of positive electrode plate

### 1.1 Preparation of composite positive electrode active material

1 mol of AlCl₃·6H₂O was put into a ball mill with a rotation speed of 400 r/min and ball milled for 1 hour; then 5 Kg of 622 ternary positive electrode material (LiNi_{0.6}Co_{0.2}Mn_{0.2}O₂) was added to the ball mill with a rotation speed of 200 r/min and ball milled for 0.5 hour; then 1.5 mol of sodium hydroxide powder was added to the ball mill at a rotation speed of 500 r/min and ball milled for 2 hours to obtain the mixture; the mixture was washed with ethanol for 3 times to remove by-products on the surface of the mixture, such as impurity salts, and was dried in a vacuum oven at 80°C for 12 hours to obtain the ternary positive electrode material covered with dialuminum trioxide (composite positive electrode active material).

### 1.2 Preparation of positive electrode plate

An aluminum foil with a thickness of 6 µm was used as the positive electrode current collector.

The composite positive electrode active material prepared in 1.1, the conductive agent carbon black, and the binder polyvinylidene fluoride (PVDF) were mixed by thorough stirring in an appropriate amount of the solvent N-methylpyrrolidone (NMP) at a mass ratio of 96.2:1.8:2 to form a homogeneous positive electrode slurry; the positive electrode slurry was uniformly applied on the surface of the positive electrode current collector aluminum foil, and the positive electrode plate was obtained after drying and cold pressing .

### 2. Preparation of negative electrode plate

A copper foil with a thickness of 8 µm was used as the negative electrode current collector.

The negative electrode active material graphite, the binder styrene-butadiene rubber (SBR), and the conductive agent carbon black (Super P) were mixed by thorough stirring in an appropriate amount of the solvent deionized water at a weight ratio of 95:2:3 to form a uniform negative electrode slurry; the negative electrode slurry was uniformly applied on the surface of the negative electrode current collector copper foil, and after drying and cold pressing, the negative electrode plate was obtained.

### 3. Separator

A porous polyethylene (PE) film was used as the separator.

### 4. Preparation of electrolytic solution

In an environment with a water content of less than 10 ppm, a non-aqueous organic solvent, ethylene carbonate EC and diethyl carbonate DMC, were mixed at a volume ratio of 1:1 to obtain the electrolytic solvent, and then lithium salt and the mixed electrolytic solvent were mixed to form the electrolytic solution with a lithium salt concentration of 1 mol/L.

### 5. Preparation of secondary battery

The above positive electrode plate, separator, and negative electrode plate were stacked in order, so that the separator was between the positive electrode plate and the negative electrode plate to play an isolation role, and then the electrode assembly was obtained by winding; the electrode assembly was placed in the outer packaging shell, and after drying, the electrolytic solution was injected, and after the vacuum packaging, standing, formation, shaping, and other processes, the lithium-ion secondary battery was obtained.

### Example 2

Examples 2-1 and 2-2 employed a method similar to that of Example 1 to prepare the lithium-ion secondary battery, differing from Example 1 in that the type of solid aluminum salt was adjusted.

### Example 3

Example 3 employed a method similar to Example 1 to prepare the lithium-ion secondary battery, differing from Example 1 in that the type of positive electrode active material was adjusted.

### Example 4

Example 4-1 to Example 4-10 employed a method similar to Example 1 to prepare the lithium-ion secondary battery, differing from Example 1 in that the amount of solid aluminum salt added was adjusted.

### Example 5

Example 5-1 to Example 5-6 employed a method similar to Example 1 to prepare the lithium-ion secondary battery, differing from Example 1 in that the amount of solid base added was adjusted.

### Comparative Example 1

Comparative Example 1 employed a method similar to Example 1 to prepare the lithium-ion secondary battery, differing from Example 1 in that the method for preparing the composite positive electrode active material was adjusted; specifically: (1) grinding and dispersing the aluminum powder with ethanol and then drying it under vacuum at 80°C; (2) after mixing the aluminum powder treated by step (1) with the LiNi_{0.6}Co_{0.2}Mn_{0.2}O₂ positive electrode active particles, mechanical stirring was carried out, in which the mixing time was 5 min, and the rotation speed of the mechanical stirring was 4000 rpm, to obtain the mixed powder; based on the total mass of the aluminum powder and the positive electrode active particles treated in step (1), wherein the mass fraction of the aluminum powder treated in step (1) was 0.5 wt%; (3) the mixed powder was placed in a nitrogen atmosphere for the annealing treatment, and the annealing temperature was 600°C, and the annealing time was 8h; (4) after the annealing, the prepared positive electrode material was passed through a 300-mesh sieve to obtain the final aluminum-covered ternary positive electrode material (composite positive electrode active material).

### Comparative Example 2

Comparative Example 2 employed a method similar to Example 1 to prepare the lithium-ion secondary battery, differing from Example 1 in that the method for preparing the composite positive electrode active material was adjusted; specifically: (1) 5 Kg of 622 ternary positive electrode materials (LiNi_{0.6}Co_{0.2}Mn_{0.2}O₂) was impregnated into 5L of oxalic acid solution with a mass percentage of 2%, the impregnation time was 10 min, and the material was dried to a moisture of less than 0.1% after filtration. The cladding agent Al₂O₃ (0.5 mol) was weighed, mixed and held at a temperature of 450°C for 8 h to complete the second baking to obtain the final dialuminum trioxide-covered ternary positive electrode material (composite positive electrode active material).

The relevant parameters of the examples and the comparative examples were shown in Table 1.

| Item | Positive electrode active material | Solid aluminum salt | | Solid base | | n | Cladding layer | | | | m wt% |
|---|---|---|---|---|---|---|---|---|---|---|---|
| | | Type | Molar amount/ mol | Type | Molar amount/m ol | | Thickness h /nm | Particle size D1 of alumina/nm | Mass percentage A% of cladding layer | Covering rate | |
| Example 1 | LiNi_{0.6}Co_{0.2}Mn_{0.2}O₂ | AlCl₃·6H₂O | 1.00 | NaOH | 1.50 | 0.67 | 26 | 20 | 1 | 99.6 | 4.60 |
| Example 2-1 | LiNi_{0.6}Co_{0.2}Mn_{0.2}O₂ | Al(NO₃)₃·9H₂O | 1.00 | NaOH | 1.50 | 0.67 | 24 | 22 | 1 | 99.5 | 6.98 |
| Example 2-2 | LiNi_{0.6}Co_{0.2}Mn_{0.2}O₂ | Al₂(SO4)₃·18H₂O | 0.50 | NaOH | 1.50 | 0.67 | 29 | 25 | 1 | 99.8 | 6.20 |
| Example 3 | LiNi_{0.6}Co_{0.2}Mn_{0.2}O₂ | AlCl₃·6H₂O | 1.00 | NaOH | 1.50 | 0.67 | 26 | 21 | 1 | 99.7 | 4.60 |
| Example 4-1 | LiNi_{0.6}Co_{0.2}Mn_{0.2}O₂ | AlCl₃·6H₂O | 0.05 | NaOH | 1.50 | 0.03 | 5 | 5 | 0.05 | 96.0 | 0.23 |
| Example 4-2 | LiNi_{0.6}Co_{0.2}Mn_{0.2}O₂ | AlCl₃·6H₂O | 0.10 | NaOH | 1.50 | 0.07 | 5 | 5 | 0.1 | 97.5 | 0.46 |
| Example 4-3 | LiNi_{0.6}Co_{0.2}Mn_{0.2}O₂ | AlCl₃·6H₂O | 0.40 | NaOH | 1.50 | 0.27 | 8 | 7 | 0.4 | 99.6 | 1.84 |
| Example 4-4 | LiNi_{0.6}Co_{0.2}Mn_{0.2}O₂ | AlCl₃·6H₂O | 0.50 | NaOH | 1.50 | 0.33 | 9 | 7 | 0.5 | 99.7 | 2.30 |
| Example 4-5 | LiNi_{0.6}Co_{0.2}Mn_{0.2}O₂ | AlCl₃·6H₂O | 0.60 | NaOH | 1.50 | 0.40 | 16 | 15 | 0.6 | 99.8 | 2.76 |
| Example 4-6 | LiNi_{0.6}Co_{0.2}Mn_{0.2}O₂ | AlCl₃·6H₂O | 0.01 | NaOH | 1.50 | 0.007 | 5 | 5 | 0.01 | 72.8 | 0.05 |
| Example 4-7 | LiNi_{0.6}Co_{0.2}Mn_{0.2}O₂ | AlCl₃·6H₂O | 0.03 | NaOH | 1.50 | 0.02 | 5 | 5 | 0.03 | 86.4 | 0.15 |
| Example 4-8 | LiNi_{0.6}Co_{0.2}Mn_{0.2}O₂ | AlCl₃·6H₂O | 0.30 | NaOH | 1.50 | 0.20 | 7 | 7 | 0.3 | 99.5 | 1.38 |
| Example 4-9 | LiNi_{0.6}Co_{0.2}Mn_{0.2}O₂ | AlCl₃·6H₂O | 2.30 | NaOH | 1.50 | 1.53 | 54 | 22 | 2.3 | 100 | 10.58 |
| Example 4-10 | LiNi_{0.6}Co_{0.2}Mn_{0.2}O₂ | AlCl₃·6H₂O | 2.82 | NaOH | 1.50 | 1.88 | 68 | 26 | 2.82 | 100 | 13.00 |
| Example 5-1 | LiNi_{0.6}Co_{0.2}Mn_{0.2}O₂ | AlCl₃·6H₂O | 1.00 | NaOH | 3.33 | 0.3 | 30 | 5 | 1 | 99.8 | 4.60 |
| Example 5-2 | LiNi_{0.6}Co_{0.2}Mn_{0.2}O₂ | AlCl₃·6H₂O | 1.00 | NaOH | 2.50 | 0.4 | 28 | 10 | 1 | 99.7 | 4.60 |
| Example 5-3 | LiNi_{0.6}Co_{0.2}Mn_{0.2}O₂ | AlCl₃·6H₂O | 1.00 | NaOH | 200 | 0.5 | 28 | 13 | 1 | 99.7 | 4.60 |
| Example 5-4 | LiNi_{0.6}Co_{0.2}Mn_{0.2}O₂ | AlCl₃·6H₂O | 1.00 | NaOH | 1.67 | 0.6 | 27 | 16 | 1 | 99.6 | 4.60 |
| Example 5-5 | LiNi_{0.6}Co_{0.2}Mn_{0.2}O₂ | AlCl₃·6H₂O | 1.00 | NaOH | 1.25 | 0.9 | 29 | 21 | 1 | 99.8 | 4.60 |
| Example 5-6 | LiNi_{0.6}Co_{0.2}Mn_{0.2}O₂ | AlCl₃·6H₂O | 1.00 | NaOH | 1.00 | 1.0 | 26 | 22 | 1 | 99.7 | 4.60 |
| Comparative Example 1 | LiNi_{0.6}Co_{0.2}Mn_{0.2}O₂ | Al | 1.00 | / | / | / | / | / | / | / | / |
| Comparative Example 2 | LiNi_{0.6}Co_{0.2}Mn_{0.2}O₂ | No (liquid) | / | / | / | / | / | / | / | / | / |

Table 1

### Test section

### 1. Performance testing of composite positive electrode active materials

### 1.1 Test of the thickness of composite positive electrode active material

A certain amount of the composite positive electrode active material prepared as described above was taken as a sample, and a thin slice of about 100 nm was cut from the middle of a single particle, and then the thin slice was subjected to transmission electron microscope analysis and testing to obtain a TEM image, and then the thicknesses of a plurality of (e.g., more than 30) different positions were measured on the TEM image, and the average value of the thicknesses was taken as the average thickness of the cladding layer. From the TEM images, it can be seen that there are obvious grain boundaries between the cladding layer and the internal positive electrode active material.

### 1.2 Average particle size D1 of alumina nanoparticles

A certain amount of the composite positive electrode active material prepared above was taken as a sample, and the alumina nanoparticles in the sample were analyzed and tested by scanning electron microscope (SEM) to obtain the SEM images, and then the sizes were counted and drawn as normal distribution curves to obtain the average particle size.

### 1.3 Volume average particle size Dv50 of composite positive electrode active material

A certain amount of the composite positive electrode active material prepared above was taken as a sample, and the volume average particle size Dv50 was tested by a Mastersizer 2000E laser particle size analyzer, with reference to GB/T 19077-2016.

### 1.4 BET specific surface area of composite positive electrode active material

A certain amount of the composite positive electrode active material prepared above was taken as a sample, and the specific surface area was tested by a Tri-Star 3020 specific surface area pore size analysis tester from Micromeritics, USA. The specific surface area was calculated by BET (BrunauerEmmett Teller) method. The testing standard was based on GB/T 19587-2017.

### 1.5 Test of covering rate B% of cladding layer

A certain amount of the composite positive electrode active material prepared above was taken as a sample, configured as a dilute slurry with ethanol, and subjected to ultrasonic dispersion treatment, and then the dilute slurry was uniformly drop on a single crystal silicon wafer to make samples, and then the samples were subjected to scanning electron microscope analysis and testing to obtain SEM images, and then multiple (e.g., more than 100) differently positioned spherical particles were selected from the SEM images using AUTO CAD software, labeling the un-covered area on the surface of each particle in the high magnification image, and counting the percentage ratio of the covering rate.

### 2. Test of performance of secondary battery

### 2.1 Cycling performance of secondary battery

At 25°C, the secondary batteries obtained from each example and comparative example were charged with constant current at a rate of 1C to a charging cut-off voltage of 4.30 V, after which they were charged with constant voltage to a current of ≤0.05 C and left to stand for 10 min, and then discharged with constant current at a rate of 1C to a discharging cut-off voltage of 3.3 V, and then left to stand for 10 min, which was recorded a charging and discharging cycle. According to this procedure, the battery was tested for 1000 charging/discharging cycles, and the corresponding discharge capacity retention rate was recorded.

### 2.2 4C Charging Resistance of secondary Battery

At 25°C, the secondary battery prepared above was discharged to 50% capacity state and left to stand for 30 min, at which time the voltage value V1 was recorded, and charging was carried out for 10 s with the current A0 corresponding to 4C rate, and the voltage value V2 corresponding to the end of charging was recorded, and the charging resistance was calculated as R=(V2-V1)/A0. In the present application, the 4C charging resistance at 25°C was used to evaluate the charging performance of the secondary battery.

### Test Results

The effect of the present application to improve the performance of the secondary battery was shown in Table 2.

**Table 2**

| Item | Discharging capacity retention rate at 25°C |
|---|---|
| Example 1 | 92.2% |
| Example 2-1 | 91.3% |
| Example 2-2 | 90.6% |
| Example 3 | 86.0% |
| Example 4-1 | 89.0% |
| Example 4-2 | 91.8% |
| Example 4-3 | 95.0% |
| Example 4-4 | 94.3% |
| Example 4-5 | 94.5% |
| Example 4-6 | 87.1% |
| Example 4-7 | 92.0% |
| Example 4-8 | 94.8% |
| Example 4-9 | 86.0% |
| Example 4-10 | 85.0% |
| Example 5-1 | 91.8% |
| Example 5-2 | 94.2% |
| Example 5-3 | 95.1% |
| Example 5-4 | 94.8% |
| Example 5-5 | 93.9% |
| Example 5-6 | 92.7% |
| Comparative Example 1 | 76.0% |
| Comparative Example 2 | 82.0% |

In Comparative Example 1, aluminum powder and positive electrode active material were physically ground for covering, and the annealing temperature was 600°C. Elemental aluminum covered the surface of the positive electrode active material, but it is easy to form a point-like covering, whereby the protective effect on the positive electrode active material was poor, and the effect of inhibiting the release of oxygen from the positive electrode active material was poor. Moreover, due to the relatively high annealing temperature, the positive electrode active material was easily deoxygenated and reduced during the sintering process, which destroyed the structure of the positive electrode active material and caused the electrochemical performance of the positive electrode active material to decrease.

In Comparative Example 2, the acid-washed material was mixed with the cladding agent and then sintered, due to the adsorption between the metal oxide and the positive electrode active material particles through Van der Waals forces, there was no bonding, so the adsorption force was weak, and the cladding layer was easy to fall off in the subsequent treatment process; and in the process of physical mixing, it was easy to occur localized pile-up phenomenon leading to uneven covering, which results in the decrease of the electrochemical performance of the positive electrode active material.

By adopting a low-temperature solid-phase chemical reaction in the Examples of the present application, a good protective effect on the surface of the positive electrode active material was obtained, thereby ensuring the electrochemical performance of the positive electrode active material.

In FIG. 7, a was a scanning electron microscope image of the composite positive electrode active material prepared in Example 1, in which it can be seen that a layer of dialuminum trioxide cladding layer uniformly covered the surface of the 622 ternary positive electrode material, with a particle size of about 20~30 nm, which was a nano-scale cladding layer, with a smooth surface, a uniform distribution, and a large number of mesopores distributed between particles, which can effectively block the side reaction of the electrolytic solution on the ternary material without hindering the transport of lithium ions.

In FIG. 7, b was a scanning electron microscope image of the composite positive electrode active material prepared in Comparative Example 1, and it can be seen that the elemental aluminum had different particle sizes and was unevenly distributed on the particle surface, local areas of which were in a bare state, and thus the elemental aluminum cannot play the effect of covering. Moreover, the particle size of aluminum was in the range of 300-500 nm, the particle size was too large, and the covering effect was poor.

In FIG. 7, c shown a scanning electron microscope image of the ternary positive electrode material of the composite positive electrode active material prepared in Comparative Example 2. It can be seen that the dialuminum trioxide on the surface of the material was in the state of a rod-like single crystal, with a particle size of about 300 nm, and even though the particles were able to very densely cover the surface of the ternary positive electrode material, the distribution of the cladding layer was not homogeneous, and the particle size of the particles was too large.

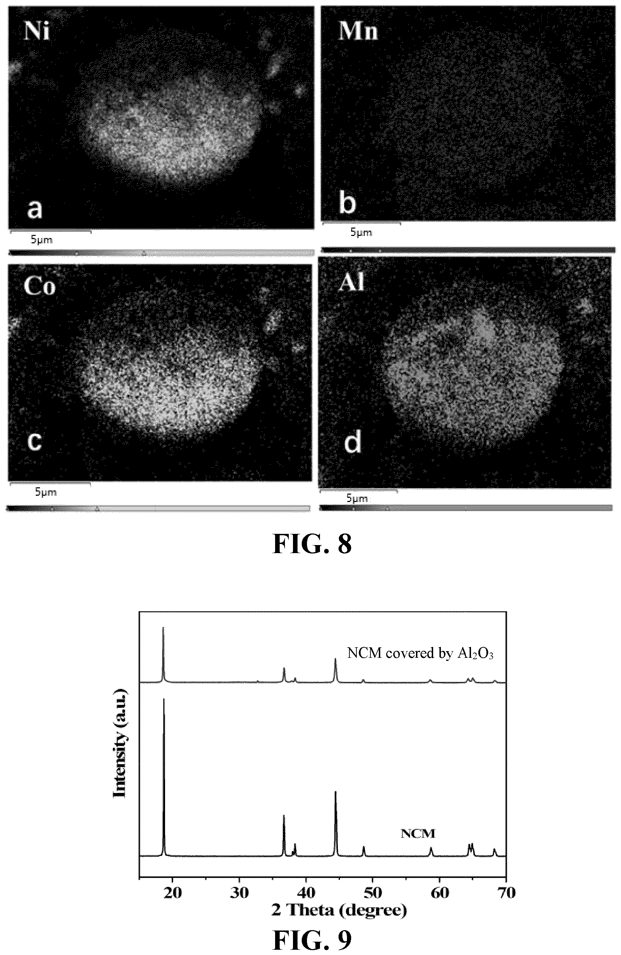

FIG. 8 shown a Mapping picture of the composite positive electrode active material prepared in Example 1, which shown that the Al element was uniformly distributed on the surface of the particles, the covering effect was good, and the cladding layer effectively covered the surface of the ternary positive electrode material particles.

FIG. 9 shown the comparison between the XRD spectrum of the pure LiNi_{0.6}Co_{0.2}Mn_{0.2}O₂ ternary positive electrode material (NCM) and that of the composite positive electrode active material prepared in Example 1 (NCM covered with Al₂O₃), from which it can be seen that before and after the covering, the main peaks basically remained unchanged, which indicated that a small amount of Al₂O₃ covering had not changed the structure of the material and basically would not affect the electrochemical performance of the positive electrode material.

Although the present application has been described with reference to the preferred embodiments, various improvements can be made and parts thereof can be replaced with equivalents without departing from the scope of the present application. In particular, as long as there is no structural conflict, each of the technical features mentioned in the various embodiments can be combined in any manner. The present application is not limited to the particular embodiments disclosed herein, but includes all technical solutions falling within the scope of the claims.

## Claims

1. A method for preparing a composite positive electrode active material, comprising:
S100, providing positive electrode active material particles;
S200, providing a solid aluminum salt to the positive electrode active material particles to make the solid aluminum salt cover a surface of the positive electrode active material particles; and
S300, providing a solid base to the positive electrode active material particles covered by the solid aluminum salt to make the solid aluminum salt and the solid base undergo an in situ solid-phase chemical reaction and generate a cladding layer covering the surface of the positive electrode active material particles, to obtain the composite positive electrode active material, wherein the cladding layer comprises alumina nanoparticles.

2. The method according to claim 1, wherein in S200, a mass percentage of the solid aluminum salt is denoted as m wt%, based on the total mass of the solid aluminum salt and the positive electrode active material particles, and 0.05≤m≤10.

3. The method according to claim 1 or 2, wherein in S300, a ratio of a molar percentage of the solid aluminum salt to a molar percentage of the solid base is denoted as n, 0.02 ≤ n ≤ 1, based on the total molar amount of the solid aluminum salt and the solid base.

4. The method according to claim 3, wherein 0.2 ≤ n ≤ 1.

5. The method according to any one of claims 1-4, wherein the positive electrode active material particles has a general formula LiₓNiₐCo_{b}Mn_{c}O₂, in which 0 < x ≤ 2.1, 0 ≤ a ≤ 1, 0 ≤ b ≤ 1, 0 ≤ c ≤ 1, and 0.1 ≤ a + b + c ≤ 1; and/or
the solid aluminum salt comprises one or more of aluminum sulfate, aluminum nitrate, and aluminum chloride; and/or
the solid base comprises sodium hydroxide and/or potassium hydroxide.

6. The method according to any one of claims 1-5, wherein in S300, the solid aluminum salt and the solid base undergo an in-situ solid-phase chemical reaction by heat treatment, and the heat treatment comprises condition (1) and/or condition (2):
(1) a temperature T°C of the heat treatment satisfies: T ≤ 100;
(2) a time S min of the heat treatment satisfies: 30 ≤ S ≤ 60.

7. The method according to claim 6, wherein 20 ≤ T ≤ 50; and/or 30 ≤ S ≤ 40.

8. The method according to any one of claims 1-7, wherein in S200, the solid aluminum salt is provided to the positive electrode active material particles under ball milling, and the rotation speed of the ball milling is from 200r/min to 800r/min; and/or the ball-milling time is from 0.5h to 6h; and/or
in S300, the solid base is provided to the positive electrode active material covered by the solid aluminum salt under ball milling, and the rotation speed of the ball milling is from 200r/min to 800r/min; and/or the ball-milling time is from 0.5h to 6h.

9. The method according to any one of claims 1-8, wherein S200 comprises: providing the solid aluminum salt and a surfactant to the positive electrode active material particles.

10. The method according to claim 9, wherein the surfactant comprises one or more of polyethylene glycol, oleic acid-oleamide, dodecanol, and hexadecanol.

11. The method according to claim 9 or 10, wherein a ratio of the molar percentage of the surfactant to the molar percentage of the solid aluminum salt is denoted as p, based on the total molar amount of the solid aluminum salt and the surfactant, 0.1 ≤ p ≤ 2.

12. The method according to claim 11, wherein 0.5 ≤ p ≤ 1.

13. The method according to any one of claims 1-12, wherein the method further comprises:
S400, washing the composite positive electrode active material with a detergent to remove by-products in the composite positive electrode active material;
S500, drying the washed composite positive electrode active material to remove the detergent.

14. The method according to claim 13, wherein the detergent comprises an alcohol solvent and/or a ketone solvent.

15. The method according to claim 14, wherein the alcohol solvent comprises methanol and/or ethanol; and/or the ketone solvent comprises acetone and/or methyl ethyl ketone.

16. A composite positive electrode active material prepared by the method according to any one of claims 1-15.

17. The composite positive electrode active material according to claim 16, wherein a mass percentage of the cladding layer is denoted as A%, based on a total mass of the composite positive electrode active material, and the composite positive electrode active material satisfies: 0.05 ≤ A ≤ 1.

18. The composite positive electrode active material according to claim 16 or 17, wherein the composite positive electrode active material satisfies at least one of conditions (3) to (7):
(3) the cladding layer has a thickness denoted as H nm, 5 ≤ H ≤ 30;
(4) the alumina nanoparticles have an average size denoted as D1 nm, 5 ≤ D1 ≤ 30;
(5) the composite positive electrode active material has a volume average particle size of Dv50, denoted as D2 µm, 6 ≤ D2 ≤ 10;
(6) the composite positive electrode active material has a BET specific surface area denoted as S mm²/g, 1 ≤ S ≤ 3;
(7) the cladding layer has a covering rate denoted as B%, 96 ≤ B ≤ 99.8, wherein the covering rate is a ratio of the inner surface area of the cladding layer occupying an outer surface area of the positive electrode active material particles.

19. A secondary battery comprising a composite positive electrode active material according to any one of claims 16-18.

20. An electric device comprising a secondary battery according to claim 19.
